# EUROPEAN PATENT SPECIFICATION

(11) **EP 0 850 797 B1**
(45) Date of publication and mention of the grant of the patent: **24.10.2001**
(21) Application number: 97310615.6
(22) Date of filing: 24.12.1997
(51) Int. Cl.: B60K 17/28, F16D 67/04

(54) **Power take-off unit with selectively engaged brake**
Zapfwellenantrieb mit selektiv betätigter Bremse
Unité pour prise de force avec freinage engagé au choix

(30) Priority: 30.12.1996 US 774399
(43) Date of publication of application: 01.07.1998
(73) Proprietor: DANA CORPORATION, Toledo, OH 43615 (US)
(72) Inventor: Warner, Russell K., Toledo, Ohio 43615 (US)
(74) Representative: Giles, Ashley Simon

(56) References cited:
- DE-A- 3 506 346
- US-A- 3 669 229
- US-A- 3 872 954
- US-A- 4 275 607
- US-A- 4 399 715

## Description

This invention relates in general to clutch-operated power take-off units for selectively driving an accessory from a vehicle engine. In particular, this invention relates to an improved structure for a power take-off unit which includes a brake assembly which is normally engaged when the clutch of the power take-off unit is disengaged and is automatically disengaged when the clutch of the power take-off unit is engaged.

Power take-off units are well known mechanical devices which are commonly used on engine driven vehicles for rotatably driving one or more driven accessories. For example, power take-off units are commonly used in industrial and agricultural applications for operating hydraulic pumps which, in turn, operate plows, trash compactors, lifting mechanisms, power winches, and a variety of other hydraulically-driven devices. In order to provide a rotatable driving connection between the engine of the vehicle and the driven accessory, a typical power take-off unit includes an input gear, an output shaft, and a gear set connected between the input gear and the output shaft. The input gear is rotatably driven by the vehicle engine, while the output shaft is connected to the driven accessory. The gear set provides one or more predetermined speed reduction gear ratios between the input gear and the output shaft. Frequently, the gear also includes a clutch for selectively disconnecting the output shaft from the input gear for intermittent operation of the driven accessory.

All of the above components of the power take-off unit are contained within a rigid housing. Generally, the housing includes a main power take-off housing having opposed open ends and two bearing caps which fit over the two open ends of the main housing. The bearing caps are usually secured to the main housing using any appropriate fastening devices. The ends of the rotatable output shaft are usually supported by annular roller or ball bearings disposed within the bearing caps, allowing the ends of the output shaft extend beyond the bearing caps to facilitate connection of driven accessory thereto. The input gear is usually supported for rotation on a non-rotatable idler shaft contained within the main housing of the power take-off. The input gear is also configured in a manner such that a portion of the input gear extends generally outward through an opening formed in the main housing. The main housing of the power take-off unit is usually mounted about an opening formed through a case of a vehicle transmission. The outwardly extending portion of the input gear extends through the transmission case opening into meshing engagement with one of the transmission gears driven by the vehicle engine. As a result, the input gear of the power take-off unit is constantly rotatably driven by the transmission gear.

In some types of power take-off units, the gear set may include an output or drive gear which is in meshing engagement with the input gear. The drive gear is freely and independently rotatable about the output shaft such that both the input gear and the drive gear rotate constantly. The gear set may also include a clutch gear which is mounted on the output shaft such that the output shaft rotates whenever the clutch gear is made to rotate. The clutch is used to operatively connect the clutch gear to the drive gear, thereby connecting the input gear to the output shaft and causing the output shaft to rotate.

Many power take-off units contain a certain amount of lubricating fluid within the housing. This lubricating fluid may, for example, be transmission fluid if the power take-off unit is mounted on a vehicle transmission. As discussed above, the input gear and other components of such a power take-off unit are constantly rotatably driven by the transmission. When this occurs, the viscous nature of the lubricating fluid can cause the output shaft to be rotated, even though the clutch is disengaged. This undesirable rotation of the output shaft has been found to occur most often at start-up of the vehicle, when the temperature of the lubricating fluid is relatively cold and viscous.

To address this, it is known to provide a power take-off unit with a brake assembly for retarding or preventing undesirable rotation of the output shaft when the clutch is disengaged. In one known power take-off unit, an internal drag brake is provided which is constantly engaged, even when the power take-off unit clutch is engaged. This type of constantly-braked power take-off unit is undesirable because of the additional components and maintenance required to keep the drag brake operable. More specifically, because the brake is constantly engaged, the amount of drag (braking force) will decrease over time due to wear, and therefore, this type of power take-off unit requires routine maintenance for adjusting the drag of the brake. In addition, this type of braked power take-off unit can only be designed with a relatively small amount of drag since the drag is constantly applied and the rotational power transmitted through the power take-off unit must be able to overcome this amount of drag to make the output shaft rotate.

In another known power take-off unit, a braking member is provided which is mechanically actuated by another component of the power take-off unit. For example, it is known to actuate a braking member through a mechanical linkage to the power take-off clutch. In this type of braked power take-off unit, the clutch is normally disengaged due to a spring which urges a clutch piston into its disengaged position. The clutch is engaged by hydraulic fluid which moves the clutch piston into its engaged position. The braking member is mechanically connected to the clutch piston such that when the clutch piston is in its disengaged position, the braking member is in its engaged position. Conversely, when the clutch piston is in its engaged position, the braking member is in its disengaged position. While this type of braked power take-off unit is simple in design, it is somewhat limited in that the operation of the brake cannot be independently controlled and is totally reliant on the successful operation of the clutch piston actuating mechanism to disengage and engage the brake.

Thus, it would be desirable to provide a brake assembly in a power take-off unit which requires no additional adjustment mechanisms and maintenance and which is positively engaged only when the clutch is disengaged. In addition, it would be desirable to provide a brake assembly which provides sufficient drag to quickly stop a rotating output shaft or to prevent a non-engaged output shaft from rotating during start-up conditions. Finally, it would be desirable to provide a brake assembly which can be actuated independently of the clutch so as to ensure a positive braking force at all times when the clutch is disengaged or even inoperable due to a failure of its actuating mechanism.

DE-A-3506346 discloses a power take-off unit having the precharacterising features of claim 1.

According to the present invention, the brake piston is connected for rotation with said output shaft and is supported for rotation in the power take-off unit.

In a preferred embodiment, the disengagement of the brake assembly occurs simultaneously with the engagement of the clutch assembly. The input gear is driven by the engine of the vehicle. Typically, the gear used to engage and drive the input gear is located in the transmission of the vehicle. The rotation of the input gear is transmitted to the output shaft when the clutch assembly is engaged. In turn, the rotation of the output shaft is used to drive any suitable piece of auxiliary equipment. The clutch assembly includes a clutch piston disposed within a clutch backup cylinder. The clutch assembly uses pressurized fluid to position the clutch in its engaged position and biasing means to position the clutch in its disengaged position. The brake assembly includes a brake piston disposed between a brake cylinder and a backing plate. The brake assembly uses biasing means to position the brake in its engaged position and pressurized fluid to position the brake in its disengaged position. Both the clutch assembly and the brake assembly receive the pressurized fluid through a common fluid passageway which is in fluid communication with a separate and independent clutch fluid passageway and brake fluid passageway. In one embodiment, all of these fluid passageways are disposed within the output shaft.

Various objects and advantages of this invention will become apparent to those skilled in the art from the following detailed description of the preferred embodiment, when read in light of the accompanying drawings.

Fig. 1 is a perspective view of a power take-off unit in accordance with this invention.

Fig. 2 is a sectional elevational view of the power take-off unit illustrated in Fig. 1, wherein the clutch assembly is disengaged and the brake assembly is engaged.

Fig. 3 is an enlarged sectional elevational view of a portion of the power take-off unit illustrated in Fig. 2, wherein the clutch assembly is disengaged and the brake assembly is engaged.

Fig. 4 is an enlarged sectional elevational view similar to Fig. 3, wherein the clutch assembly is engaged and the brake assembly is disengaged.

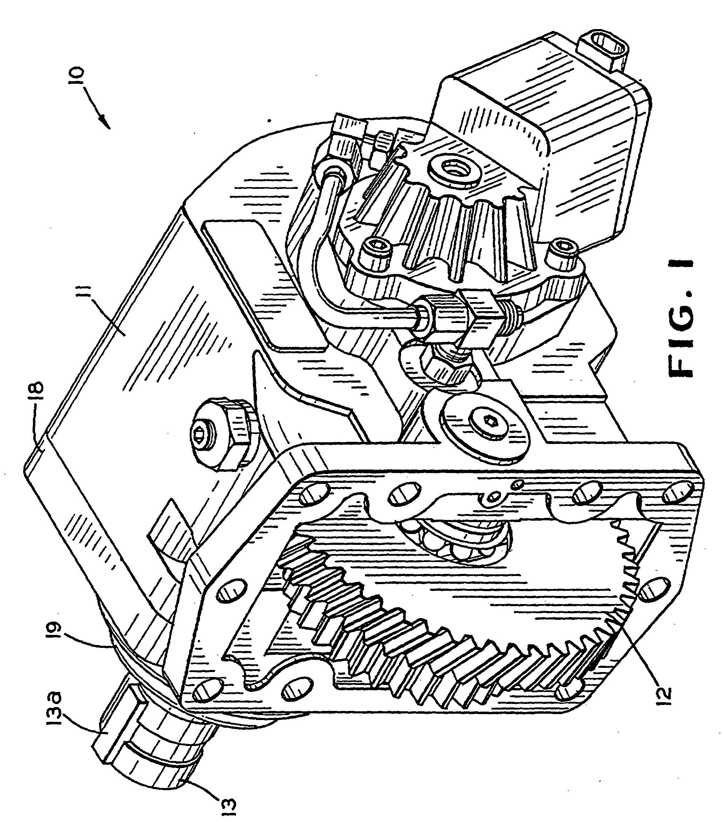

Referring now to the drawings, there is illustrated in Fig. 1 a power take-off unit, indicated generally at 10, in accordance with this invention. The basic structure and mode of operation of the power take-off unit 10 are well known in the art, and only those portions of the power take-off unit 10 which are necessary for a complete understanding of the invention will be described. The power take-off unit 10 includes a rigid housing 11 which contains an input gear 12 and an output shaft 13. The input gear 12 is adapted to be rotatably driven by an engine (not shown) of a vehicle or other source of rotational power in a conventional manner. The output shaft 13 is adapted to be connected to rotatably driven accessory (not shown), such as a hydraulic pump. The illustrated output shaft 13 is cylindrical in shape and is provided with a conventional key 13a for facilitating a rotatable driving connection with the driven accessory.

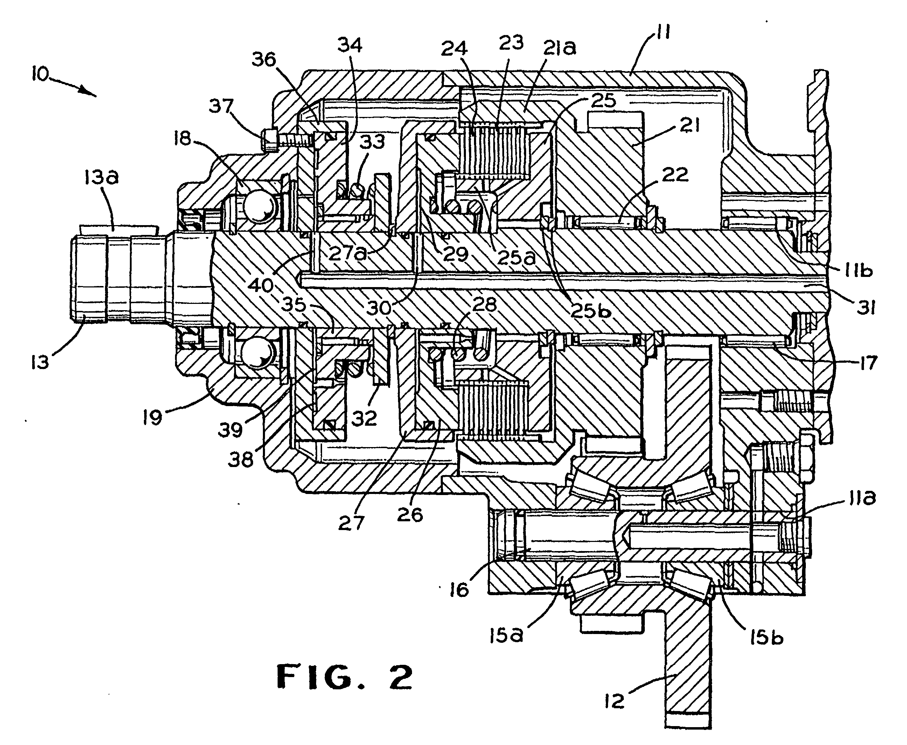

Referring now to Fig. 2, the input gear 12 is supported by a pair of tapered roller bearings 15a and 15b for rotation on a non-rotatable idler shaft 16 contained within the housing 11 of the power take-off unit 10. The ends of the idler shaft 16 are supported within respective openings 11a formed through the housing 11 of the power take-off unit 10. One end of the output shaft 13 (the right end when viewing Fig. 2) is rotatably supported by conventional needle bearings 17 provided within an opening 11b formed through the housing 11 of the power take-off unit 10. The other end of the output shaft 13 (the left end when viewing Fig. 2) is rotatably supported by a conventional annular bearing 18 mounted within a bearing cap 19 secured about an open end of the housing 11 of the power take-off unit 10.

The power take-off unit 10 includes a clutch assembly for selectively providing a driving connection between the input gear 12 and the output shaft 13. The clutch assembly includes a drive gear 21 which meshes with the input gear 12. The drive gear 21 is rotatably supported on the output shaft 13 by a plurality of conventional needle bearings 22. The drive gear 21 includes an axially-extending hollow cylindrical portion 21a having a splined inner surface. A plurality of flat annular clutch plates 23 is splined to the inner splined surface of the hollow cylindrical portion 21a of the drive gear 21 for rotation therewith. Thus, the drive gear 21 and the clutch plates 23 are constantly rotatably driven by the input gear 12. A plurality of annular friction plates 24 is disposed in alternating fashion between the clutch plates 23. The friction plates 24 are splined to an outer splined surface provided on an axially extending cylindrical portion 25a of a clutch gear 25 for rotation therewith. The clutch gear 25 is splined or otherwise secured to the output shaft 13 for rotation therewith. Thus, the friction plates 24, the clutch gear 25, and the output shaft 13 are connected for rotation together as a unit. The clutch gear 25 is restrained from axial movement in one direction (toward the right when viewing Figs. 2, 3, and 4) by one or more retaining rings 25b which are mounted on the output shaft 13, for a purpose which will be explained below.

The clutch plates 23 and the friction plates 24 form a portion of a clutch assembly for the power take-off unit 10. An annular clutch piston 26 is provided for selectively causing the clutch plates 23 and the friction plates 24 to frictionally engage one another so as to engage the clutch assembly. To accomplish this, the clutch piston 26 is disposed within a hollow cylindrical clutch cylinder 27. The clutch cylinder 27 has an opened end, within which the clutch piston 26 extends, and a closed end. Both the clutch piston 26 and the clutch cylinder 27 are supported on the output shaft 13. The clutch piston 26 is slidable along the output shaft 13 in both axial directions. One end of the clutch piston 26 (the left end when viewing Figs. 2, 3, and 4) is disposed within the clutch cylinder 27, while the opposite end of the clutch piston 26 is disposed adjacent to the clutch plates 23 and friction plates 24. The clutch cylinder 27 is restrained from axial movement in one direction (toward the left when viewing Figs. 2, 3, and 4) by one or more retaining rings 27a which are mounted on the output shaft 13, for a purpose which will be explained below.

A coiled clutch spring 28 reacts between the clutch piston 26 and the clutch gear 25. As discussed above, the clutch gear 25 is restrained from axial movement in one direction (toward the right when viewing Figs. 2, 3, and 4) by the retaining rings 25b. Thus, the clutch spring 28 urges the clutch piston 26 axially in the opposite direction (toward the left when viewing Figs. 2, 3, and 4) away from engagement with the clutch plates 23 and the friction plates 24 to a disengaged position adjacent the closed end of the clutch cylinder 27. When the clutch piston 26 is in this disengaged position, the clutch plates 23 and the friction plates 24 do not frictionally engage one another. As a result, the clutch gear 25 is not connected to be rotatably driven by the drive gear 21.

An annular space 29 is defined between the clutch piston 26 and the closed end of the clutch cylinder 27. The annular space 29 communicates through a transverse passageway 30 and an axial passageway 31 formed through the output shaft with a source of pressurized fluid (not shown). As will be explained in greater detail below, when pressurized fluid is provided from the source to the annular space 29, the clutch piston 26 can be moved axially against the urging of the clutch spring 28 from the disengaged position to an engaged position. In the engaged position, the clutch piston 26 compresses the clutch plates 23 and the friction plates 24 so as to cause the clutch gear 25 (and the output shaft 13 splined thereto) to be rotatably driven by the drive gear 21.

The power take-off unit 10 further includes a brake assembly for selectively retarding rotation of the output shaft 13. The brake assembly includes a brake backup plate 32 which is mounted on the output shaft 13 for rotation therewith. The brake backup plate 32 is restrained from axial movement in one direction (toward the right when viewing Figs. 2, 3 and 4) by the retaining ring 27a. A coiled brake spring 33 reacts between the brake backup plate 32 and a first end 34a of a brake piston 34. The brake piston 34 is splined on a brake hub 35 for rotation therewith. The brake piston 34 is axially slidable along the brake hub 35 in both directions. Since the brake backup plate 32 is restrained from axial movement, the brake spring 33 normally urges the brake piston 34 axially in the opposite direction (toward the left when viewing Figs. 2, 3 and 4) away from the backup plate 32. The brake hub 35 is splined or otherwise secured to the output shaft 13 for rotation therewith. Thus, the brake hub 35, brake piston 34, brake spring 33, brake backup plate 32, and the output shaft 13 are connected for rotation together as a unit.

The brake piston 34 also includes a second end 34b which is disposed within a hollow cylindrical brake cylinder 36. The brake cylinder 36 has an opened end, within which the brake piston 34 extends, and a closed end. The brake cylinder 36 is disposed around the output shaft 13. The brake cylinder 36 is secured to the bearing cap 19 by at least one threaded bolt 37 or any other suitable fastener. Thus, the brake cylinder 36 does not rotate. The second end 34b of the brake piston 34 has a braking surface 38 disposed thereon. Alternatively, the braking surface 38 may be attached to the brake cylinder 36 or both the brake piston 34 and the brake cylinder 36.

An annular space 39 is defined between the brake piston 34 and the closed end of the brake cylinder 36. The annular space 39 communicates through a brake transverse passageway 40 formed in the output shaft 13 and the axial passageway 31 described previously. As will be explained in greater detail below, when pressurized fluid is provided from the source to the annular space 39, the brake piston 34 can be moved axially against the urging of the brake spring 33 from an engaged position to a disengaged position. In the engaged position, the braking surface 38 on the brake piston 34 frictionally engages the brake cylinder 36 so as to prevent rotation of the brake piston 34 and therefore, the output shaft 13. In the disengaged position, the braking surface 38 is not frictionally engaged with the brake cylinder 36, thereby allowing the brake piston 34 and the output shaft 13 to rotate freely.

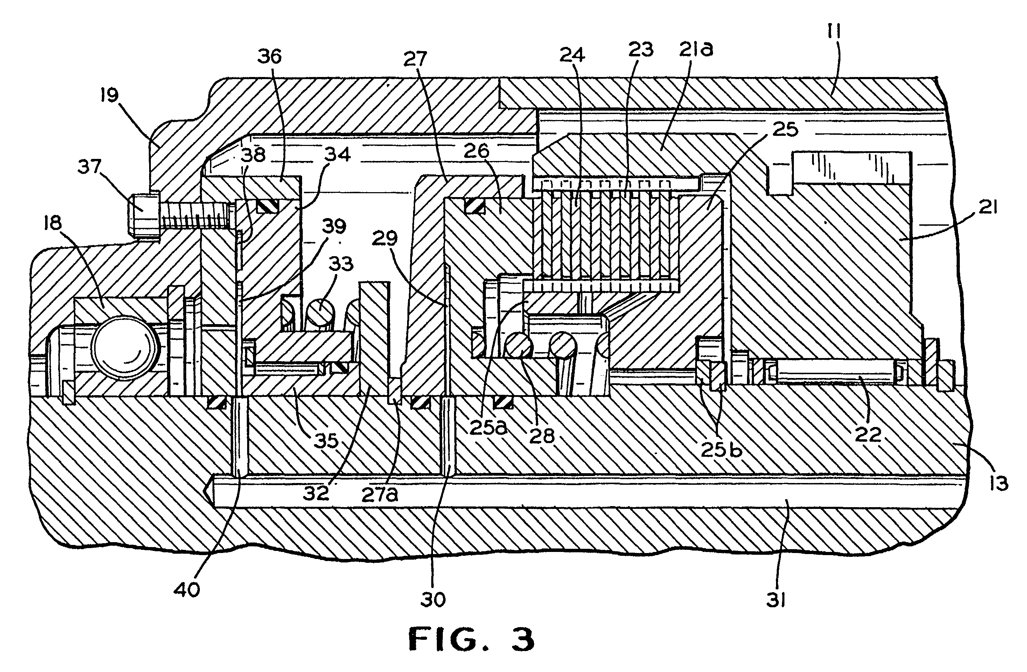

In operation, the power take-off unit 10 functions as follows: When the engine and transmission have not been started, all components within the power take-off unit 10 are at rest. When the engine and transmission are started, the input gear 12 begins to rotate which, in turn, causes the drive gear 21 to freely rotate around the output shaft 13. Because the power take-off unit 10 has not been placed in service by the operator of the vehicle, the common axial passageway 31 and the clutch transverse passageway 30 will not be pressurized with pressurized fluid. Therefore, the clutch assembly will be in its normally disengaged position due to the action of the clutch spring 28 urging the clutch piston 26 towards the clutch backup cylinder 27 and away from the clutch plates 23 and friction plates 24. A detailed partial view of the clutch assembly in its normally disengaged position is shown in Fig. 3. Similarly, the brake transverse passageway 40 will not be pressurized. Therefore, the brake assembly will be in its normally engaged position due to the action of the brake spring 33 urging the brake piston 34 into contact with the brake cylinder 36 and thereby causing frictional engagement between the braking surface 38 and the brake cylinder 36. Fig. 3 also shows the brake assembly in its normally engaged position. Because the clutch assembly is disengaged, the output shaft 13 is not operatively connected to the input gear 12 and therefore, does not rotate. In addition, because the brake assembly is also engaged during these conditions, no undesirable rotation of the output shaft 13 should result from the viscous drag of the lubricating fluid within the power take-off unit 10.

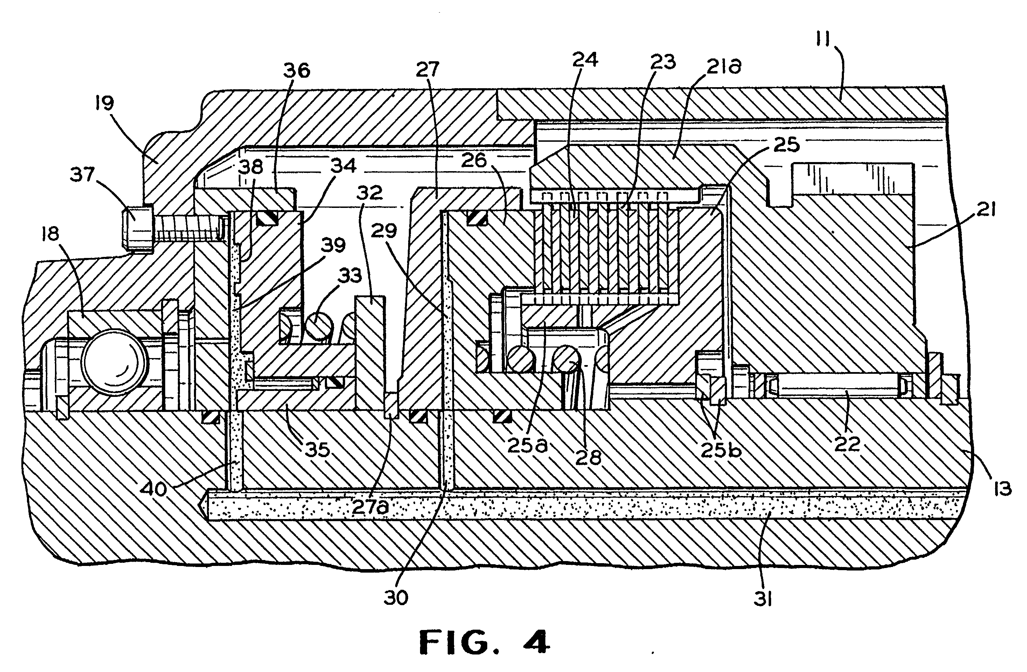

When the power take-off unit 10 is placed in service by the operator of the vehicle, the common axial passageway 31, the clutch transverse passageway 30, and the brake transverse passageway 40 become pressurized with the pressurized fluid. These conditions are shown in Fig. 4. Once the fluid pressure within the clutch annular space 29 becomes sufficient to overcome the force of the clutch spring 28, the clutch piston 26 is moved away from the clutch backup cylinder 27 and begins to compress the friction plates 24 and clutch plates 23 together. At some point, the clutch plates 23 and friction plates 24 will become frictionally engaged thereby causing the clutch gear 25 and the output shaft 13 to rotate with the drive gear 21. Because the brake fluid passageway 40 is connected to the common fluid passageway 31, the brake annular space 39 will begin to be pressurized nearly simultaneously to the pressurization of the clutch annular space 29. Once the fluid pressure within the brake annular space 39 becomes sufficient to overcome the force of the brake spring 33, the brake piston 34 will be moved away from the brake cylinder 36. The movement of the brake piston 34 away from the brake cylinder 36 results in a loss of frictional engagement of the braking surface 38 with the brake cylinder 36, thereby allowing the output shaft 13 to rotate.

In the illustrated embodiment of this invention, the term "pressurized fluid" includes any hydraulic fluid or any compressed gas. Furthermore, the illustrated embodiment shows both the clutch transverse passageway 30 and the brake transverse passageway 40 being supplied with a pressurized fluid through the common axial passageway 31 and having the same effective fluid flow area. Therefore, when the clutch assembly is actuated to either its engaged or disengaged position, the brake assembly will be actuated to either its disengaged or engaged position, respectively, nearly simultaneously. Alternatively, the fluid passageways could be designed such that the two passageways have different effective fluid flow areas so as to allow either the engagement of the clutch assembly or the disengagement of the brake assembly to occur slightly before or after the other action. For example, the clutch transverse passageway 30 could include a restriction orifice which would decrease its effective fluid flow area thereby increasing the time required to engage the clutch assembly. In this configuration, the brake assembly would be fully disengaged before the clutch assembly is engaged. Alternatively, the power take-off unit 10 could be designed such that the clutch assembly is fully engaged before the brake assembly is disengaged. Furthermore, the point in time and the speed at which either the clutch assembly is engaged or the brake assembly is disengaged can also be affected by the changing the relative sizes of the surface area of the clutch piston 26 or the brake piston 34.

## Claims

1. A power take-off unit (10) adapted to be connected between an engine-driven vehicular transmission and a driven accessory, said power take-off unit comprising:
a rotatably driven input gear (12) adapted to be connected to the transmission;
a rotatable output shaft (13) adapted to be connected to the driven accessory;
a clutch assembly for selectively connecting said input gear (12) to rotatably drive said output shaft (13), said clutch assembly including a clutch plate (23) connected for rotation with said input gear, a friction plate (24) connected for rotation with said output shaft, a clutch spring (28) for normally maintaining said clutch plate (23) and said friction plate (24) in a disengaged relationship such that said input gear (12) does not rotatably drive said output shaft (13), and a clutch piston (26) that is responsive to fluid pressure for moving said clutch plate (23) and said friction plate (24) to an engaged relationship such that said input gear (12) rotatably drives said output shaft (13); and
a brake assembly for selectively retarding rotation of said output shaft (13), said brake assembly including a brake cylinder (36) that is restrained from rotation, a brake piston (34) disposed within said brake cylinder (36) and a brake spring (33) for normally maintaining said brake cylinder (36) and said brake piston (34) in an engaged relationship such that said brake piston (34) engages said brake cylinder (36) to retard rotation of said output shaft (13), said brake piston (34) being responsive to fluid pressure for moving said brake cylinder (36) and said brake piston (34) to a disengaged relationship such that said brake piston (34) does not engage said brake cylinder (36) to retard rotation of said output shaft (13);
**characterised in that** said brake piston (34) is connected for rotation with said output shaft (13) and is supported for rotation in the power take-off unit (10).

2. The power take-off unit (10) defined in Claim 1 further including a housing (11) enclosing said input gear (12), said output shaft (13), said clutch assembly, and said brake assembly, said brake cylinder (36) being connected to said housing so as to be restrained from rotation.

3. The power take-off unit (10) defined in Claim 1 wherein said clutch piston (26) and said brake piston (34) are responsive to fluid pressure for simultaneously moving said clutch plate (23) and said friction plate (24) to a disengaged relationship such that said input gear (12) does not rotatably drive said output shaft (13) and moving said brake cylinder (36) and said brake piston (34) to a disengaged relationship such that said brake piston (34) does not engage said brake cylinder (36) to retard rotation of said output shaft (13).

4. The power take-off unit (10) defined in Claim 1 wherein said clutch piston (26) is supported on said output shaft (13).

5. The power take-off unit (10) defined Claim 1 wherein said clutch assembly includes a clutch cylinder (27), said clutch piston (26) being disposed in said clutch cylinder (27).

6. The power take-off unit (10) defined in Claim 5 wherein said clutch cylinder (27) is supported on said output shaft (13).

7. The power take-off unit (10) defined in Claim 5 wherein a clutch chamber (29) is defined between said clutch cylinder (27) and said clutch piston (26), and further including a passageway (30, 31) formed through said output shaft that communicates with said clutch chamber.

8. The power take-off unit (10) defined in Claim 1 wherein a brake chamber (39) is defined between said brake cylinder (36) and said brake piston (34), and further including a passageway (40) formed through said output shaft (13) that communicates with said brake chamber (39).

9. The power take-off unit (10) defined in Claim 1 wherein said clutch assembly includes a clutch cylinder (27), said clutch piston (26) being disposed in said clutch cylinder (27), and wherein a clutch chamber (29) is defined between said clutch cylinder (27) and said clutch piston (26), and a wherein brake chamber (39) is defined between said brake cylinder (36) and said brake piston (34), and further including a passageway (40) formed through said output shaft (13) that communicates with said clutch chamber (29) and said brake chamber (39).

10. The power take-off unit (10) defined in Claim 1 wherein said brake piston (34) is supported on said output shaft (13).

## Patentansprüche

1. Zapfenwellenantrieb (10), welcher derart beschaffen und ausgelegt ist, daß er als eine Verbindung zwischen einem mittels einer Brennkraftmaschine angetriebenen Fahrzeuggetriebe und einem angetriebenen Zusatzgerät vorgesehen werden kann, wobei der Zapfenwellenantrieb folgendes aufweist:
ein drehbar angetriebenes Eingangszahnrad (12), welches derart beschaffen und ausgelegt ist, daß es mit dem Getriebe verbindbar ist;
eine drehbare Ausgangswelle (13), welche derart beschaffen und ausgelegt ist, daß sie mit dem angetriebenen Zusatzgerät verbindbar ist;
eine Kupplungsanordnung zum selektiven Verbinden des Eingangszahnrades (12) zum Drehantreiben der Ausgangswelle (13), wobei die Kupplungsanordnung eine Kupplungsplatte (23), welche zur Ausführung einer Drehbewegung mit dem Eingangszahnrad verbunden ist, eine Reibungsplatte (24), welche zur Ausführung einer Drehbewegung mit der Ausgangswelle verbunden ist, eine Kupplungsfeder (28), die im Grundzustand die Kupplungsplatte (23) und die Reibungsplatte (24) in einem ausgerückten Zustand derart hält, daß das Eingangszahnrad (12) die Ausgangswelle (13) nicht drehantreibt, und einen Kupplungskolben (26) umfaßt, welcher auf einen Fluiddruck zur Bewegung der Kupplungsplatte (23) und der Reibungsplatte (24) in einen Einrückzustand derart anspricht, daß das Eingangszahnrad (12) die Ausgangswelle (13) drehantreibt, und
eine Bremsanordnung zum selektiven Verlangsamen der Drehbewegung der Ausgangswelle (13), wobei die Bremsanordnung einen Bremszylinder (36) umfaßt, welcher drehfest angeordnet ist, ferner einen Bremskolben (34), welcher in dem Bremszylinder (36) angeordnet ist, und eine Bremsfeder (33) umfaßt, welche im Grundzustand den Bremszylinder (36) und den Bremskolben (34) in Eingriffstellung derart hält, daß der Bremskolben (34) mit dem Bremszylinder (36) zur Verlangsamung der Drehbewegung der Ausgangswelle (13) zusammenarbeitet, wobei der Bremskolben (34) auf den Fluiddruck zur Bewegung des Bremszylinders (36) und des Bremskolbens (34) in eine Ausrückposition derart anspricht, daß der Bremskolben (34) nicht mit dem Bremszylinder (36) zusammenarbeitet, um die Drehbewegung der Ausgangswelle (13) zu verlangsamen;
**dadurch gekennzeichnet, daß** der Bremskolben (34) zur Ausführung einer Drehbewegung mit der Ausgangswelle (13) verbunden ist, und daß der Bremskolben (34) zur Ausführung einer Drehbewegung in dem Zapfenwellenantrieb (10) gelagert ist.

2. Zapfenwellenantrieb (10) nach Anspruch 1, welcher ferner ein Gehäuse 11) umfaßt, welches das Eingangszahnrad (12), die Ausgangswelle (13), die Kupplungsanordnung und die Bremsanordnung umschließt, wobei der Bremszylinder (36) mit dem Gehäuse derart verbunden ist, daß er drehfest ist.

3. Zapfenwellenantrieb (10) nach Anspruch 1, bei dem der Kupplungskolben (26) und der Bremskolben (24) auf den Fluiddruck zur gleichzeitigen Bewegung der Kupplungsplatte (23) und der Reibungsplatte (24) in einen Ausrückzustand derart ansprechen, daß das Eingangszahnrad (12) die Ausgangswelle (13) nicht drehantreibt, und daß der Bremszylinder (36) und der Bremskolben (34) derart in eine Ausrückposition bewegt werden, daß der Bremskolben (34) nicht mit dem Bremszylinder (36) zur Verlangsamung der Drehbewegung der Ausgangswelle (13) zusammenarbeitet.

4. Zapfenwellenantrieb (10) nach Anspruch 1, bei dem der Kupplungskolben (26) an der Ausgangswelle (13) gelagert ist.

5. Zapfenwellenantrieb (10) nach Anspruch 1, bei dem die Kupplungsanordnung einen Kupplungszylinder (27) umfaßt, und der Kupplungskolben (26) in dem Kupplungszylinder (27) angeordnet ist.

6. Zapfenwellenantrieb (10) nach Anspruch 5, bei dem der Kupplungszylinder (27) auf der Ausgangswelle (13) gelagert ist.

7. Zapfenwellenantrieb (10) nach Anspruch 5, bei dem eine Kupplungskammer (29) zwischen dem Kupplungszylinder (27) und dem Kupplungskolben (26) gebildet wird, und bei dem ferner ein Durchgang (30, 31) vorgesehen ist, welcher von der Ausgangswelle gebildet wird und in kommunizierender Verbindung mit der Kupplungskammer steht.

8. Zapfenwellenantrieb (10) nach Anspruch 1, bei dem eine Bremskammer (39) zwischen dem Bremszylinder (36) und dem Bremskolben (34) gebildet wird, bei dem ferner ein Durchgang (40) vorgesehen ist, welcher durch die Ausgangswelle (13) geht und in kommunizierender Verbindung mit der Bremskammer (39) steht.

9. Zapfenwellenantrieb (10) nach Anspruch 1, bei dem die Kupplungsanordnung einen Kupplungszylinder (27) umfaßt, der Kupplungskolben (26) in dem Kupplungszylinder (27) angeordnet ist, eine Kupplungskammer (29) zwischen dem Kupplungszylinder (27) und dem Kupplungskolben (26) gebildet wird, eine Bremskammer (39) zwischen dem Bremszylinder (36) und dem Bremskolben (34) gebildet wird, und ferner ein Durchgang (40) vorgesehen ist, welcher durch die Ausgangswelle (13) gebildet wird und in kommunizierender Verbindung mit der Kupplungskammer (29) und der Bremskammer (39) steht.

10. Zapfenwellenantrieb (10) nach Anspruch 1, bei dem der Bremskolben (34) auf der Ausgangswelle (13) gelagert ist.

## Revendications

1. Unité pour prise de force (10) apte à être connectée entre une transmission véhiculaire entraînée par moteur et un accessoire entraîné, ladite unité pour prise de force comprenant :
un engrenage d'entrée entraîné en rotation (12) apte à être relié à la transmission ;
un arbre de sortie tournant (13) apte à être connecté à l'accessoire mené ;
un ensemble d'embrayage pour relier sélectivement ledit engrenage d'entrée (12) pour entraîner en rotation ledit arbre de sortie (13), ledit ensemble d'embrayage comprenant un disque d'embrayage (23) relié à rotation audit engrenage d'entrée, un plateau de friction (24) relié à rotation audit arbre de sortie, un ressort d'embrayage (28) pour maintenir normalement ledit disque d'embrayage (23) et ledit plateau de friction (24) en une relation hors prise de telle sorte que ledit engrenage d'entrée (12) n'entraîne pas en rotation ledit arbre de sortie (13), et un piston d'embrayage (26) qui réagit à une pression de fluide pour déplacer ledit disque d'embrayage (23) et ledit plateau de friction (24) en une relation en prise de telle sorte que ledit engrenage d'entrée (12) entraîne en rotation ledit arbre de sortie (13) ; et
un ensemble de frein pour retarder sélectivement la rotation dudit arbre de sortie (13), ledit ensemble de frein incluant un cylindre de frein (36) qui est empêché de tourner, un piston de frein (34) disposé dans ledit cylindre de frein (36) et un ressort de frein (33) pour maintenir normalement ledit cylindre de frein (36) et ledit piston de frein (34) en une relation en prise de telle sorte que ledit piston de frein (34) vient en prise avec ledit cylindre de frein (36) pour retarder la rotation dudit arbre de sortie (13), ledit piston de frein (34) réagissant à une pression de fluide pour amener ledit cylindre de frein (36) et ledit piston de frein (34) en une relation hors prise de telle sorte que ledit piston de frein (34) ne vient pas en prise avec ledit cylindre de frein (36) pour retarder la rotation dudit arbre de sortie (13) ;
**caractérisée en ce que** ledit piston de frein (34) est relié à rotation audit arbre de sortie (13) et est supporté à rotation dans l'unité pour prise de force (10).

2. Unité pour prise de force (10) selon la revendication 1, incluant en outre un boîtier (11) renfermant ledit engrenage d'entrée (12), ledit arbre de sortie (13), ledit ensemble d'embrayage et ledit ensemble de frein, ledit cylindre de frein (36) étant relié audit boîtier de façon qu'il soit empêché de tourner.

3. Unité pour prise de force (10) selon la revendication 1, où ledit piston d'embrayage (26) et ledit piston de frein (34) réagissent à une pression de fluide pour amener simultanément ledit disque d'embrayage (23) et ledit plateau de friction (24) en une relation hors prise de telle sorte que ledit engrenage d'entrée (12) n'entraîne pas en rotation ledit arbre de sortie (13) et amenant ledit cylindre de frein (36) et ledit piston de frein (34) en une relation hors prise de telle sorte que ledit piston de frein (34) ne vient pas en prise avec ledit cylindre de frein (36) pour retarder la rotation dudit arbre de sortie (13).

4. Unité pour prise de force (10) définie dans la revendication 1, où ledit piston d'embrayage (26) est supporté sur ledit arbre de sortie (13).

5. Unité pour prise de force (10) selon la revendication 1, où ledit ensemble d'embrayage comprend un cylindre d'embrayage (27), ledit piston d'embrayage (26) étant disposé dans ledit cylindre d'embrayage (27).

6. Unité pour prise de force (10) selon la revendication 5, où ledit cylindre d'embrayage (27) est supporté sur ledit arbre de sortie (13).

7. Unité pour prise de force (10) selon la revendication 5, où un carter d'embrayage (29) est défini entre ledit cylindre d'embrayage (27) et ledit piston d'embrayage (26) et incluant en outre un passage (30, 31) ménagé à travers ledit arbre de sortie qui communique avec ledit carter d'embrayage.

8. Unité pour prise de force (10) selon la revendication 1, où une chambre de frein (39) est définie entre ledit cylindre de frein (36) et ledit piston de frein (34), et incluant en outre un passage (40) ménagé à travers ledit arbre de sortie (13) qui communique avec ladite chambre de frein (39).

9. Unité pour prise de force (10) définie dans la revendication 1, où ledit ensemble d'embrayage comporte un cylindre d'embrayage (27), ledit piston d'embrayage (26) étant disposé dans ledit cylindre d'embrayage (27), et où une chambre d'embrayage (29) est définie entre ledit cylindre d'embrayage (27) et ledit piston d'embrayage (26), et où une chambre de frein (39) est définie entre ledit cylindre de frein (36) et ledit piston de frein (34), et incluant en outre un passage (40) ménagé à travers ledit arbre de sortie (13) qui communique avec ledit carter d'embrayage (29) et ladite chambre de frein (39).

10. Unité pour prise de force (10) selon la revendication 1, où ledit piston de frein (34) est supporté sur ledit arbre de sortie (13).
